# EUROPÄISCHE PATENTSCHRIFT

(11) **EP 1 484 960 B1**
(45) Veröffentlichungstag und Bekanntmachung des Hinweises auf die Patenterteilung: **22.11.2006**
(21) Anmeldenummer: 03714823.6
(22) Anmeldetag: 13.03.2003
(51) Int. Cl.: A01J 5/04

(54) **MILCHSCHLAUCH MIT STOSSABSORBIERENDEM BEREICH**
MILK TUBE WITH AN IMPACT-ABSORBING AREA
TUYAU A LAIT COMPORTANT UNE ZONE D'ABSORPTION DES CHOCS

(30) Priorität: 19.03.2002 DE 10212161
(43) Veröffentlichungstag der Anmeldung: 15.12.2004
(73) Patentinhaber: Hatzack, Wilfried, 86842 Türkheim (DE); Maier, Jakob, Jun., 86842 Türkheim (DE)
(72) Erfinder: Hatzack, Wilfried, 86842 Türkheim (DE); Maier, Jakob, Jun., 86842 Türkheim (DE)
(74) Vertreter: Grünecker, Kinkeldey, Stockmair & Schwanhäusser Anwaltssozietät
(86) Internationale Anmeldenummer: PCT/EP2003/002641
(87) Internationale Veröffentlichungsnummer: WO 2003/077644

(56) Entgegenhaltungen:
- DE-A- 1 607 023
- DE-A- 10 022 716
- US-A- 4 869 205

## Beschreibung

Die vorliegende Erfindung betrifft einen Milchschlauch, der in einer automatischen Melkanlage ein Milchsammelstück strömungsmäßig mit einem Melkbecher verbindet.

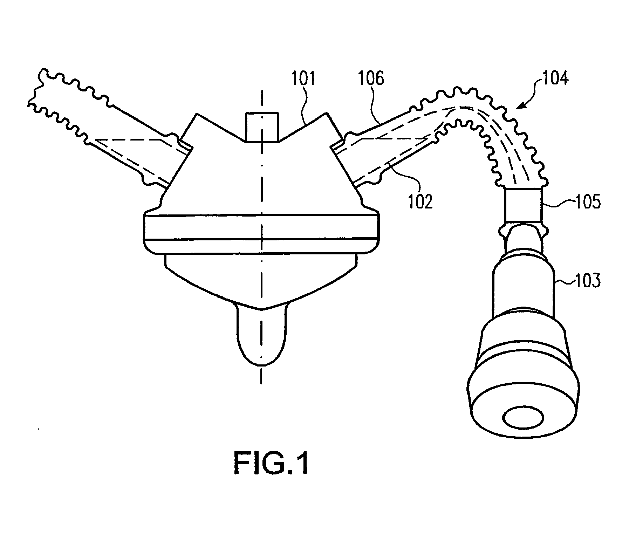

In modernen Agrarbetrieben wird fast ausschließlich zum Melken von Tieren eine automatische Melkanlage verwendet, die im Wesentlichen aus einer Unterdruckquelle, aus mehreren Melkbechern, die an das Euter des Tieres anzulegen sind, einer Milchsammeleinheit, die im Weiteren auch als Milchsammelstück bezeichnet wird, und einem Sammelbehälter aufgebaut ist. Ferner sind flexible Verbindungsleitungen zwischen dem Melkbecher und dem Milchsammelstück sowie zwischen dem Milchsammelstück und dem Sammelbehälter vorgesehen. Dabei ist in der Regel die flexible Verbindungsleitung zwischen dem Melkbecher und dem Milchsammelstück, die im Weiteren als Milchschlauch bezeichnet wird, starken Belastungen durch Abknicken und stoßartige Einwirkungen, beispielsweise Trittbelastungen durch Personal und Tieren ausgesetzt. Um die Problematik besser zu verdeutlichen, sei mit Bezug zu Fig. 1 ein Teil einer typischen automatischen Melkanlage und deren Betriebsweise dargestellt.

In Fig. 1 ist ein Milchsammelstück 101 gezeigt, das Anschlussstutzen 102 aufweist, an denen jeweils ein Milchschlauch 104 befestigt ist. Der Einfachheit halber ist lediglich ein Milchschlauch vollständig dargestellt. Ein Melkbecher 103 ist ebenfalls mit dem Milchschlauch 104 verbunden, so dass eine Fluidverbindung zwischen dem Milchsammelstück 101 und dem Melkbecher 103 hergestellt ist. Der Milchschlauch 104 umfasst einen ersten Endbereich 105, der auf einen entsprechenden (nicht gezeigten) Anschlussstutzen des Melkbechers 103 aufgeschoben ist und einen zweiten Endbereich 106, der auf den Anschlussstutzen 102 aufgeschoben ist. Die weiteren Komponenten der automatischen Melkanlage, etwa die Unterdruckquelle, der Sammelbehälter sowie die Verbindungsleitung von Milchsammelstück 101 zum Sammelbehälter sind der Einfachheit halber nicht dargestellt.

Während der Verwendung der automatischen Melkanlage, insbesondere beim Anlegen und Abnehmen des Melkgeschirrs sowie beim Reinigen und beim Transport des Melkgeschirrs wirken ständig Kräfte auf den Milchschlauch 104 in Form von Zug- und Biegebelastungen sowie stoßartigen Belastungen. Beispielsweise besteht vor und nach dem Melkvorgang die Gefahr, dass das Tier auf Teile des Melkgeschirrs, insbesondere auf den Milchschlauch 104 tritt. Ferner treten insbesondere beim Transportieren des Melkgeschirrs aufgrund der flexiblen Verbindung der einzelnen Teile, d.h. der Melkbecher 103 und des Milchsammelstücks 101, vermehrt stoßartige Belastungen, die beispielsweise von benachbarten Melkbechern hervorgerufen werden, auf das Milchsammelstück 101 und dort insbesondere am Anschlussstutzen 102 auf. Insbesondere die stoßartigen Belastungen, die beim Fallenlassen des Melkgeschirrs auf den Milchschlauch im Bereich des Anschlussstutzens auftreten, führen zu Mikro-Perforationen im Milchschlauch und schließlich zum Bruch des Milchschlauchs. Diese während des täglichen Gebrauchs ständig auftretenden stoßartigen Belastungen führen letztlich zu einem vorzeitigen Materialverschleiß und damit Bruch des Milchschlauchs 104 im Bereich des zweiten Endbereichs 106. Durch das Brechen des Milchschlauchs 104 werden nicht nur zusätzliche Kosten verursacht, sondern durch den typischerweise allmählich einsetzenden Materialbruch kann es über einen gewissen Zeitraum hinweg im zweiten Endbereich 106 zur Ansammlung von Milchrückstandsresten und einer damit verbundenen qualitativen Beeinträchtigung der Milch kommen.

Angesichts der zuvor geschilderten Problematik ist es daher wünschenswert, eine entsprechende Vorrichtung bereitzustellen, die die negative Auswirkung stoßartiger Belastungen auf die Lebensdauer des Milchschlauch verhindert oder zumindest stark reduziert.

Erfindungsgemäß wird diese Aufgabe gelöst durch einen Milchschlauch gemäß Anspruch 1.

Gemäß einem weiteren Aspekt der vorliegenden Erfindung wird eine Stoßabsorptionsvorrichtung zum Anbringen an einem Milchschlauch bereitgestellt, wobei die Stoßabsorptionsvorrichtung einen stoßabsorbierenden Bereich mit den gleichen Merkmalen wie der zuvor beschriebene stoßabsorbierende Bereich aufweist und ferner so ausgebildet ist, dass die Vorrichtung an einem Endbereich des ein Milchsammelstück und einen Melkbecher strömungsmäßig verbindenden Milchschlauchs befestigbar ist.

Durch die länglichen Stoßabsorptionselemente, die so ausgebildet sind, dass sich bei radialer Stoßbelastung, d.h. bei einer Krafteinwirkung, die im Wesentlichen in radialer Richtung auf den Milchschlauch einwirkt, wird durch die Verformung bzw. die Verbiegung in einer für jedes der länglichen Stoßabsorptionselemente zumindest abschnittsweise charakteristischen Richtung Energie aufgenommen. Somit ist durch die Ausprägung einer Vorzugsrichtung für die Verformung bzw. Verbiegung eine effiziente Dämpfung der Stoßbelastung gewährleistet, wodurch die Materialermüdung und somit das Brechen des Milchschlauches im Bereich des zweiten Endbereichs deutlich verringert wird. Alternativ oder zusätzlich sind noppenartige Stoßabsorptionselemente vorgesehen, die durch die noppenartige Struktur bedingt, durch Verformung bzw. Verbiegung ebenfalls Energie aufnehmen und somit eine Verringerung der Materialermüdung bewirken. Die kinetische Energie der stoßartigen Krafteinwirkung am Endbereich wird im wesentlichen zur elastischen Verformung der Stoßabsorptionselemente genutzt und teilweise bei der Wiederherstellung der ursprünglichen Form der Stoßabsorptionselemente wieder in kinetische Energie zurückverwandelt, so dass die Bildung von Mikro-Perforationen stark reduziert ist. Ferner wird ein direkter Kontakt mit den die Fluidverbindung des Milchschlauchs definierenden Materialbereichen beim Zusammenstoß mit einem die Stoßbelastung ausübenden Körper weitestgehend vermieden, da die Stoßabsorptionselemente gewissermaßen als Puffer fungieren. Auf diese Weise können "Verletzungen" des zweiten Endbereichs selbst durch scharfkantige Gegenstände aufgrund der Pufferwirkung der Stoßabsorptionselemente verhindert oder zumindest verringert werden.

In einer weiteren Ausbildung sind die länglichen Stoßabsorptionselemente zur Flächennormale des zweiten Endbereichs zumindest abschnittsweise geneigt.

Aufgrund dieser Ausbildung ist es somit in effizienter Weise möglich, eine Vorzugsrichtung für das Verbiegen der länglichen Absorptionselemente unter Einwirkung einer im Wesentlichen radialen Stoßbelastung zu definieren. Die zumindest abschnittsweise geneigten länglichen Stoßabsorptionselemente verbiegen sich unter Einwirkung der Belastung so, dass der Neigungswinkel weiter vergrößert wird und somit eine verbesserte Dämpfung erreicht wird im Gegensatz zu in der gesamten Längsrichtung radial ausgerichteten länglichen Rippen.

Vorzugsweise weisen die länglichen Stoßabsorptionselemente zumindest einen Abschnitt auf mit einem Neigungswinkel mit der Flächennormalen im Bereich von 8° bis 50° ein. Innerhalb dieses Wertebereiches verbiegen sich die länglichen Stoßabsorptionselemente zuverlässig in die Richtung, in der der Neigungswinkel vergrößert wird, wobei der Grad der Absorptionsfähigkeit, d.h. die "Weichheit" beim Dämpfen, u.a. durch den Neigungswinkel bestimmbar ist.

In einer weiteren Ausbildung sind die länglichen Stoßabsorptionselemente zumindest abschnittsweise zur Längsachse des zweiten Endbereichs geneigt. Dadurch lassen sich vielfältige Muster aus länglichen Absorptionselementen schaffen, die durch den schrägen Verlauf bezüglich der Längsachse eine weitergehende Stabilisierung des zweiten Endbereichs, beispielsweise im Hinblick auf Verwindungsstefigkeit, etc., liefern können.

In einer weiteren Ausführungsform sind die länglichen Stoßabsorptionselemente so ausgerichtet, dass ein erster Abschnitt jedes Elements einen ersten Neigungswinkel zur Flächennormalen aufweist, und ein zweiter Abschnitt einen zweiten Neigungswinkel, der sich vom ersten unterscheidet aufweist.

Vorzugsweise ändert sich der Wert des Neigungswinkels kontinuierlich vom ersten Abschnitt zum zweiten Abschnitt. Dadurch lässt sich die stoßabsorbierende Wirkung an verschieden Bereichen unterschiedlich einstellen.

In einer weiteren Ausführungsform ist der erste Neigungswinkel umgekehrt zum zweiten Neigungswinkel orientiert, wobei der Übergang kontinuierlich erfolgt.

Durch diese Ausgestaltung der länglichen Stoßabsorptionselemente wird zum einen eine hohe Dämpfungsfähigkeit am Anfang und am Ende des stoßabsorbierenden Bereichs gewährleistet, während in der Mitte, in der der Neigungswinkel zur Flächennormale ungefähr gleich 0 ist, eine relativ hohe Steifigkeit des zweiten Endbereichs des Milchschlauchs bewirkt wird.

In einer weiteren Ausführungsform weisen die länglichen Stoßabsorptionselemente eine Dicke im Bereich von 0.5 bis 5 mm auf. Mit diesem Wertebereich lässt sich die stoßabsorbierende bzw. Pufferwirkung geeignet einstellen, so dass beispielsweise in einem Bereich mit großer Dicke eine höhere Festigkeit des Milchschlauchs und im Bereich mit geringerer Dicke eine verstärkte Pufferwirkung erreicht wird. Dabei kann die Dicke innerhalb eines Stoßabsorptionselements variieren oder benachbarte Elemente können jeweils eine einheitliche aber zueinander unterschiedliche Dicke aufweisen.

In einer weiteren Ausgestaltung liegt die Höhe der einzelnen länglichen Stoßabsorptionselemente in einem Bereich von 1 bis 10 mm. Ebenso wie die Dicke kann auch die Höhe der länglichen Stoßabsorptionselemente zur Einstellung der absorbierenden Wirkung entsprechend verwendet werden.

In einer weiteren Ausführungsform variiert die Dicke und/oder die Höhe der länglichen Stoßabsorptionselemente entlang der Längsrichtung der Elemente. Auf diese Weise lassen sich gezielt die Eigenschaften des stoßabsorbierenden Bereichs einstellen, so dass beispielsweise mit einer geringeren Dicke und/oder einer entsprechenden Höhe die Dämpfung verbessert werden, während in einem anderen Abschnitt des Elements zugleich eine Versteifung des zweiten Endbereichs gewünscht wird und dies mit einer größeren Dicke und/oder einer angepassten Höhe erzielt wird.

In einer weiteren Ausführungsform weist der stoßabsorbierende Bereich in Längsrichtung eine Ausdehnung von 20 bis 60 mm auf. Dieser Längenbereich lässt zum einen eine ausreichende Überdeckung mit dem Anschlussstutzen zu, um eine dämpfende Wirkung besonders in diesem Bereich des Milchschlauchs zu erreichen, lässt aber andererseits ausreichend Länge für den restlichen Milchschlauch, um die geforderte Flexibilität des Milchschlauchs zu gewährleisten.

In einer weiteren Ausführungsform sind der stoßabsorbierende Bereich und der zweite Endbereich des Milchschlauchs aus einem Materialstück gebildet. Dadurch lässt sich beispielsweise der Milchschlauch unter Verwendung einer einzigen Spritzform und unter Ausübung eines einzigen Spritzvorgangs herstellen, so dass die entsprechenden Kosten im Vergleich zu einem konventionellen Milchschlauch nicht ansteigen.

In einer weiteren Ausführungsform sind noppenartige Stoßabsorptionselemente vorgesehen mit einem Durchmesser im Bereich von 1 bis 8 mm und einer Länge von 1 bis 10 mm. Wie bereits erwähnt wurde, können die noppenartigen Stoßabsorptionselemente alternativ, d.h. ausschließlich, oder in Verbindung mit den länglichen Stoßabsorptionselementen vorgesehen sein, wobei insbesondere die genannten Wertebereiche für den Durchmesser sowie die Länge der noppenartigen Elemente ein Einstellen des Absorptionsvermögens bzw. der Pufferwirkung des stoßabsorbierenden Bereichs in einem gewünschten Bereich zulassen.

In einer weiteren Ausbildung sind die noppenartigen Stoßabsorptionselemente zumindest mit zwei unterschiedlichen Längen und/oder Durchmessern in dem stoßabsorbierenden Bereich vorgesehen. Durch die gleichzeitig vorhandenen unterschiedlichen Längen und/oder Durchmesser lassen sich die elastischen bzw. dämpfenden Eigenschaften des stoßabsorbierenden Bereichs sehr gezielt einstellen. Beispielsweise können in einem ersten Bereich relativ lange, dünne Noppen vorgesehen sein, so dass sich dort eine sehr "weiche" Dämpfung ergibt, während in einem zweiten Bereich kürzere dickere Noppen zum Absorbieren höherer Belastungen vorgesehen sind.

In einer weiteren Ausführungsform sind neben den noppenartigen Stoßabsorptionselementen rippenförmige Verstärkungselemente vorgesehen, die im Wesentlichen radial ausgerichtet sind, so dass sich durch die rippenförmigen Verstärkungselemente eine erhöhte Längsstabilität des zweiten Endbereichs ergibt. Durch die kombinierte Verwendung der rippenförmigen Verstärkungselemente und der stoßabsorbierenden noppenartigen Elemente kann ein äußerst längsstabiler und auch verwindungssteifer Endbereich am Milchschlauch bereitgestellt werden, der durch die noppenartigen Elemente ferner über eine ausgeprägte Fähigkeit zur Absorbierung von stoßförmigen Belastungen verfügt.

In einer weiteren Ausgestaltung ist die Höhe der rippenförmigen Verstärkungselemente kleiner als die Länge der noppenartigen Stoßabsorptionselemente. Durch diese Anordnung wird erreicht, dass eine kurzfristig auftretende Stoßbelastung von den längeren noppenartigen Elementen aufgenommen wird, während die rippenförmigen Verstärkungselemente eine erhöhte Längsstabilität gegenüber länger anhaltenden einwirkenden Kräften zur Folge haben.

In einer weiteren Ausführungsform der Stoßabsorptionsvorrichtung zum Anbringen an einem Milchschlauch ist ein Befestigungselement vorgesehen, um die Stoßabsorptionsvorrichtung an dem Milchschlauch zu befestigen. Hinsichtlich der Ausgestaltung des stoßabsorbierenden Bereichs der Stoßabsorptionsvorrichtung sei auf die zuvor genannten Ausführungsformen sowie auf die folgende detaillierte Beschreibung verwiesen.

Weitere vorteilhafte Ausführungsformen sind in den Unteransprüchen definiert.

Im Folgenden werden mit Bezugnahme zu den begleitenden Zeichnungen spezielle Ausführungsbeispiele detailliert beschrieben. In den Figuren zeigen:
- Fig. 1: schematisch einen Teil einer konventionellen Melkanlage zur Veranschaulichung der Problematik, die dieser Anmeldung zugrunde liegt;
- Fig. 2a: schematisch eine Teilseitenansicht eines Milchsammelstücks mit einem Milchschlauch gemäß einer Ausführungsform der vorliegenden Erfindung;
- Fig. 2b: eine Draufsicht des Milchschlauchs aus Fig. 2a mit einer Ausschnittsvergrößerung;
- Fig. 2c: einen Querschnitt senkrecht zur Längsachse des Milchschlauchs aus Fig. 2a;
- Fig. 3a bis 3e: schematisch Darstellungen weiterer beispielhafter Ausgestaltungen des stoßabsorbierenden Bereichs; und
- Fig. 4: schematisch eine Ausführungsform der Stoßabsorptionsvorrichtung, die mittels eines Befestigungselements an einem Milchschlauch befestigt ist.

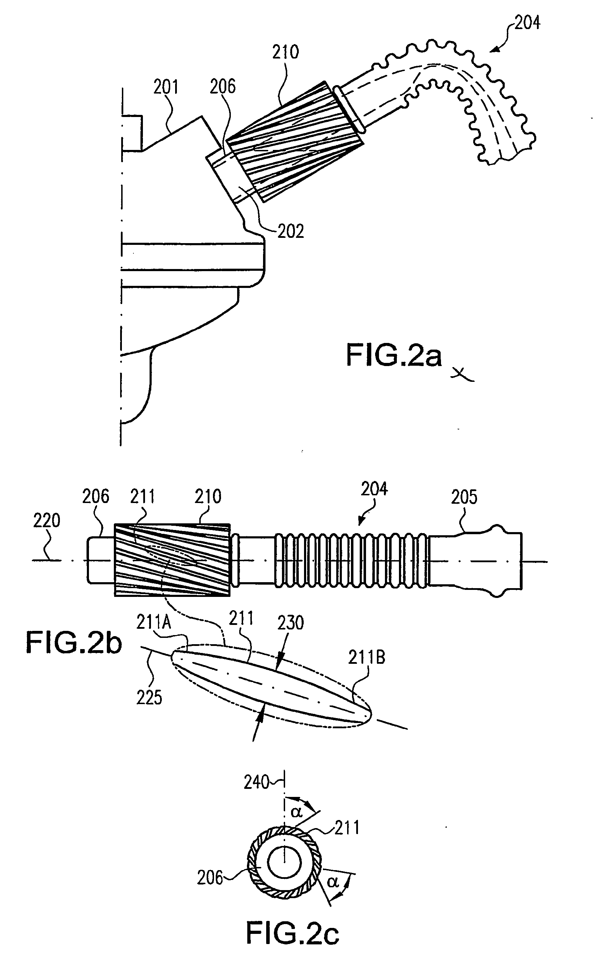

Mit Bezug zu den Fig. 2a bis 2c werden im folgenden anschauliche Ausführungsbeispiele beschrieben, wobei in den Fig. 2a bis 2c durchwegs die gleichen Bezugszeichen für die gleichen Komponenten verwendet sind, auch wenn diese Komponente in einer der einzelnen Darstellungen nicht gezeigt ist.

In Fig. 2a ist in einer schematischen Seitenansicht eine beispielhafte Ausführungsform gezeigt, wobei an einem Anschlussstutzen 202 eines Milchsammelstücks 201 ein Milchschlauch 204 befestigt ist. Der Milchschlauch 204 ist mit einem Endbereich 206 über den Anschlussstutzen 202 geschoben. Ferner ist am Endbereich 206 ein stoßabsorbierender Bereich 210 vorgesehen, der bei Krafteinwirkung mit radialer Komponente eine dämpfende Wirkung ausübt.

In Fig. 2b ist der Milchschlauch 204 in einer Seitenansicht detaillierter dargestellt, wobei das Milchsammelstück 201 nicht gezeigt ist. Der Milchschlauch 204 mit einem ersten Endbereich 205 ist geradlinig dargestellt, wobei eine Längsachse 220 eingezeichnet ist. Der stoßabsorbierende Bereich 210 weist längliche Stoßabsorptionselemente 211 auf, die in der in Fig. 2b dargestellten Ausführungsform schräg zur Längsachse 220 verlaufen. Der Winkel, den die länglichen Stoßabsorptionselemente 211 mit der Längsachse 220 einschließen, ist nicht eingeschränkt und kann entsprechend der gewünschten Puffer- und Stabilitätswirkung gewählt werden. Der Winkel kann dabei im Bereich von 0° bis 90° liegen.

In Fig. 2c ist ein Querschnitt senkrecht zur Längsachse 220 dargestellt, wobei am Fußpunkt zweier beispielhafter länglicher Stoßabsorptionselemente 211 jeweils eine Flächennormale 240 bzw. eine Achse in radialer Richtung eingezeichnet ist. Die länglichen Stoßabsorptionselemente 211 sind so angeordnet, dass die Höhe der Elemente 211 und die damit definierte Richtung einen Winkel α mit der Flächennormalen 240 einschließt, wobei der Winkel α zumindest in einem Abschnitt der Elemente 211 im Bereich von 8 bis 50° variiert.

Wie aus Fig. 2c ersichtlich ist, wird bei einer Krafteinwirkung in etwa in Richtung der Flächennormalen 240 eine Verformung bzw. Verbiegung der beaufschlagten Stoßabsorptionselemente 211 verursacht, wodurch eine dämpfende bzw. puffemde Wirkung erreicht wird. Durch den Neigungswinkel α wird erreicht, dass stoßartige Krafteinwirkungen, die im Wesentlichen entlang der radialen Richtung 240 auf den Endbereich 206 ausgeübt werden, stets zu einer Verformung bzw. Verbiegung der länglichen Stoßabsorptionselemente 211 in einer im Wesentlichen vorgegebenen Richtung führen. Dadurch wird eine deutlich höhere Dämpfung erreicht im Vergleich zu entsprechenden länglichen Elementen, die im Wesentlichen nur radial, also parallel zur Richtung 220, ausgerichtet sind. Die dämpfende Wirkung der Stoßabsorptionselemente 211 hängt dabei von der Art des Materials, dem Abstand der einzelnen Stoßabsorptionselemente 211, deren Höhe und deren Dicke ab.

In einer bevorzugen Ausführungsform sind die länglichen Stoßabsorptionselemente 211 aus dem gleichen Material als der Milchschlauch 204 gebildet, was vorteilhafter Weise in einem einzelnen Herstellungsvorgang erreichbar ist. Ein geeignetes Material für die länglichen Stoßabsorptionselemente 211 ist beispielsweise eine Silikonmischung, wie sie für konventionelle Milchschläuche verwendet wird. Der Abstand zwischen zwei länglichen Stoßabsorptionselementen 211 kann im Bereich von 0,5 bis 8 mm liegen.

In einer weiteren Ausführungsform, die schematisch in der Vergrößerung in Fig. 2b dargestellt ist, ist ein Stoßabsorptionselement 211 gezeigt, das einen ersten Abschnitt 211 a und einen zweiten Abschnitt 211 b aufweist. Eine Längsachse 225 kennzeichnet die Längsrichtung des länglichen Stoßabsorptionselements 211 und die Pfeile 230 repräsentieren die Dicke des Elements 211. Wie in dieser Ansicht erkennbar ist, ist in dieser Ausführungsform die Dicke 230 in der Längsrichtung 225 variabel, derart, dass die Dicke im ersten Abschnitt 211a und im zweiten Abschnitt 211 b im Wesentlichen gleich, aber kleiner als in dem dazwischen liegenden Bereich ist. Durch diese unterschiedlichen Dicken lassen sich somit die Dämpfungseigenschaften der einzelnen Elemente einstellen. In dem gezeigten Beispiel sind also die Abschnitte 211a und 211b leichter verformbar oder verbiegbar als der mittlere Bereich mit der maximalen Dicke. In ähnlicher Weise können die länglichen Stoßabsorptionseiemente 211 in der Längsrichtung 225 in der Höhe variieren.

In einer weiteren Ausführungsform ist der Neigungswinkel α (vergleiche Fig. 2c) zwischen der radialen Richtung 240 und der Höhenrichtung des länglichen Stoßabsorptionselementes 211 im Abschnitt 211a unterschiedlich zu dem Winkel im Abschnitt 211b. Beispielsweise kann der Neigungswinkel α von einem festgesetzten Anfangswert kontinuierlich zur Mitte hin abnehmen, um schließlich im Abschnitt 211b einen negativen Wert anzunehmen, der betragsmäßig im Wesentlichen mit dem Anfangswert α übereinstimmen kann. Durch das Ändern des Neigungswinkels kann somit ebenso die dämpfende Wirkung des Stoßabsorptionselements 211 entlang der Länge des stoßabsorbierenden Bereichs 210 eingestellt werden. In bevorzugten Ausführungsformen liegt der Bereich des Betrags des Neigungswinkels zwischen 8 und 50°. Durch das Variieren des Neigungswinkels kann somit abschnittsweise in den länglichen Stoßabsorptionselementen die Dämpfung eingestellt werden, wobei in Bereichen mit geringem Neigungswinkel oder Neigungswinkel 0 eine erhöhte Stabilisierung des Endbereichs 206 in der Längsrichtung 220 erreicht wird.

Typischerweise weist der stoßabsorbierende Bereich 210 eine Ausdehnung von mindestens 20 bis 60 mm in der Längsrichtung 220 auf, so dass dadurch der Bereich des Anschlussstutzens 202 für viele gängige Milchsammelstücke 201 überdeckt ist. Damit lassen sich insbesondere die in diesem Bereich äußerst schädigenden Auswirkungen von Stoßbelastungen deutlich reduzieren, wodurch die Lebensdauer des Milchschlauchs 204 sowie die Hygiene im Anschlussbereich erhöht wird.

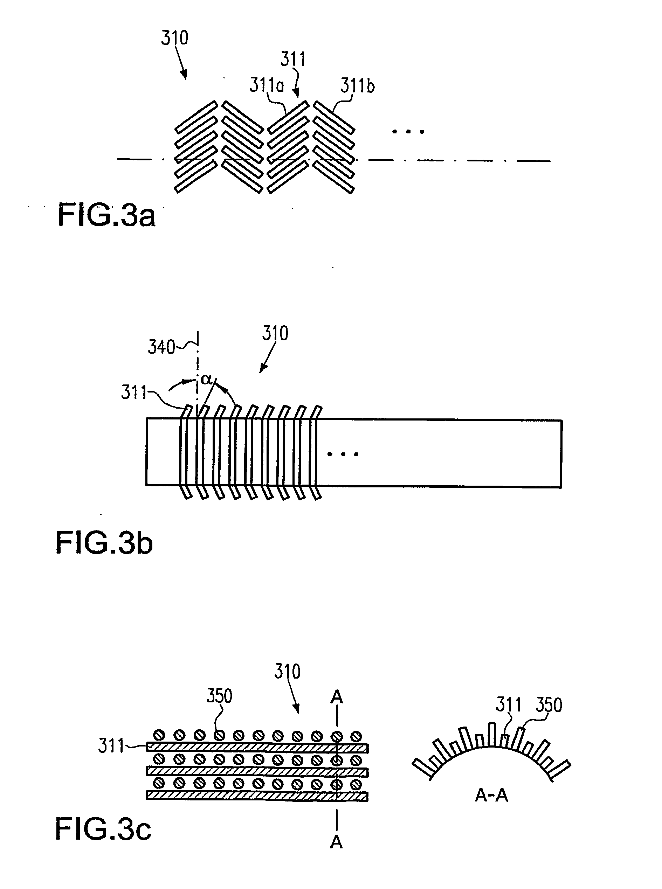

In den Fig. 3a bis 3e werden in schematischer Form weitere beispielhafte Ausführungsformen für die Ausgestaltung eines stoßabsorbierenden Bereichs dargestellt.

In Fig. 3a ist eine schematische Seitenansicht eines stoßabsorbierenden Bereichs 310 gezeigt, wobei längliche Stoßabsorptionselemente 311 erste Abschnitte 311a und zweite Abschnitte 311b aufweisen. Die ersten Abschnitte 311a sind bezüglich einer Längsrichtung 320 schräg angeordnet, so dass die schräg angeordneten Abschnitte 311a dem stoßabsorbierenden Bereich 310 bei großflächiger Quetschung eine erhöhte Stabilität verleihen. Anzumerken ist, dass die ersten Bereiche 311a jedoch auch relativ parallel zur Längsachse 320 verlaufen können. In ähnlicher Weise sind die zweiten Abschnitte 311b schräg zur Längsachse 320 angeordnet, jedoch vorzugsweise unter einem inversen Neigungswinkel im Vergleich zu den ersten Abschnitten 311a. Vorteilhafterweise weisen die ersten Abschnitte 311a einen ersten Neigungswinkel in ihrer Höhenrichtung zur radialen Richtung auf (vgl. Fig. 2c) und die zweiten Abschnitte 311b weisen einen zweiten Neigungswinkel auf, der betragsmäßig gleich dem ersten Neigungswinkel sein kann, sich aber in der Richtung unterscheidet. Auf diese Weise ist immer einer der beiden Abschnitte 311a und 311b bei einer Krafteinwirkung, beispielsweise bei Kontakt mit einem Melkbecher, die nicht in radialer Richtung erfolgt, so ausgerichtet, dass eine optimale Dämpfung in einem der beiden Abschnitte erfolgt. Sofern also eine nicht zu kleinflächige Berührung mit einem Gegenstand erfolgt, lässt sich eine dämpfende Wirkung in einem der beiden Abschnitte 311a oder 311b erreichen. Bei im Wesentlichen radialer Einwirkung tragen beide Abschnitte 311a und 311b zur Dämpfung bei. Hinsichtlich der Ausformung der einzelnen Abschnitte 311a, 311b gelten die gleichen Gesichtspunkte, wie sie mit Bezug in den Fig. 2a bis 2c beschriebenen Ausführungsformen aufgeführt sind.

Fig. 3b zeigt eine weitere Variante des stoßabsorbierenden Bereichs 310, wobei ringförmige Stoßabsorptionselemente 311 vorgesehen sind. In diesem Zusammenhang sei angemerkt, dass der Begriff "länglich" in der Beschreibung und den Patentansprüchen so gemeint ist, dass diese ringförmigen Elemente 311 eine Länge aufweisen, die im wesentlichen dem Umfang entspricht, wobei länglich damit bedeuten soll, dass eine Ausdehnung in einer Richtung wesentlich größer als die Ausdehnung in einer zweiten dazu senkrechten Richtung ist, die als Dicke bezeichnet wird. Wie in der Figur zu erkennen ist, ist der Neigungswinkel α zwischen der radialen Richtung 340 und der Höhenrichtung der Stoßabsorptionselemente 311 so ausgeprägt, dass sich in ähnlicher Weise wie in den Ausführungsformen, die mit Bezug zu der Fig. 2 beschrieben sind, eine Verbiegung bzw. Verformung in einer vordefinierten Richtung ergibt, wenn eine Belastung in nahezu radialer Richtung 340 erfolgt. Für die Dicke, die Höhe, die Abstände und das verwendete Material für die Stoßabsorptionselemente 311 gelten in gleicher Weise die zuvor aufgeführten Gesichtspunkte.

Fig. 3c zeigt schematisch eine weitere Ausführungsform des stoßabsorbierenden Bereichs 310, wobei längliche Elemente 311 in Verbindung mit noppenartigen Stoßabsorptionselementen 350 vorgesehen sind. Die länglichen Elemente 311 können hinsichtlich ihrem Neigungswinkel, der Dicke und der Höhe eine ähnliche Struktur aufweisen, wie sie bislang in Verbindung mit den länglichen Stoßabsorptionselementen 311 der Fig. 3a und 3b sowie den Elementen 211 in den Fig. 2 dargestellt sind. In einer bevorzugten Ausführungsform dienen die länglichen Elemente 311 als Verstärkungselemente, die die Längsstabilität des Endbereichs des Milchschlauchs erhöhen. Die benachbart zu den Verstärkungselementen 311 angeordneten noppenartigen Elemente 350 dienen zur Dämpfung von außen einwirkender Stoßbelastungen. Zu diesem Zwecke weisen die noppenartigen Elemente 350 eine größere Länge bzw. Höhe auf als die länglichen Verstärkungselemente 311. Auf der rechten Seite in Fig. 3c ist eine schematische Querschnittsdarstellung gezeigt, in der der Höhenunterschied zwischen den Elementen 311 und 350 zu erkennen ist. Bei Auftreten einer Krafteinwirkung werden somit zunächst die noppenartigen Elemente 350 verformt bzw. verbogen und dämpfen damit die Wirkung der auftretenden Kraft, während die länglichen Verstärkungselemente 311 kaum zur Dämpfung beitragen, sondern die Stabilität in Längsrichtung erhöhen. In einer Ausführungsform liegen die Werte für den Durchmesser der noppenartigen Elemente 350 im Bereich von 1 bis 8 mm, während die Höhe im Bereich 1 bis 10 mm liegt. Für die länglichen Verstärkungselemente 311 liegt die Höhe vorzugsweise im Bereich von 1 bis 5 mm mit einer Dicke im Bereich von 2 bis 8 mm. In einer nicht gezeigten Ausführungsform können die noppenartigen Elemente 350 mit unterschiedlichen Durchmessern und/oder Längen bzw. Höhen vorgesehen sein. So können beispielsweise die noppenartigen Elemente 350 mit einer ersten größeren Höhe vorgesehen sein, um ein weiches Dämpfen zu ermöglichen, und es können noppenartige Elemente 350 mit einer zweiten Höhe vorgesehen sein, um größere Kräfte abzudämpfen. In ähnlicher Weise kann der Radius der einzelnen noppenartigen Elemente 350 variiert werden, um eine gewünschte Dämpfungswirkung zu erreichen. Anstelle zweier unterschiedlicher Höhen bzw. Durchmesser können selbstverständlich eine Vielzahl unterschiedlicher Werte verwendet werden. Ferner können die länglichen Verstärkungselemente 311 in einer Vielzahl geometrischer Muster vorgesehen sein. Insbesondere können die Verstärkungselemente 311 in den in den Fig. 3a und 3b gezeigten Mustern sowie in diversen Abwandlungen davon vorgesehen sein.

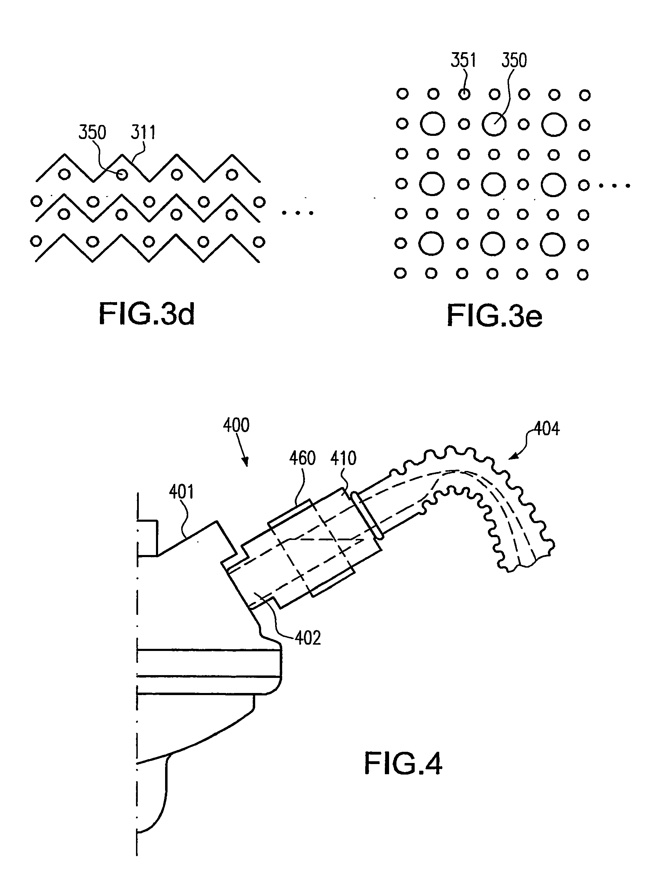

Fig. 3d zeigt schematisch eine weitere Ausführungsform mit länglichen Stoßabsorptionselementen bzw. Verstärkungselementen 311 und noppenartigen Stoßabsorptionselementen 350. Vorzugsweise sind in dieser Ausführungsform die noppenartigen Elemente 350 ebenso wie in der zuvor genannten Ausführungsform, höher als die Verstärkungselemente 311. Durch die Zick-Zack-Form der Verstärkungselemente 311 wird eine erhöhte Festigkeit sowohl in radialer als auch in axialer Richtung des Milchschlauchs im Anschlussbereich erreicht, wobei gleichzeitig die noppenartigen Elemente 350 für die erforderliche Dämpfung bei Stoßbelastung sorgen. In dieser Ausführungsform können die noppenartigen Elemente einzeln oder als Gruppe mit unterschiedlichen Radien und/oder Höhen vorgesehen sein. Ferner können die Verstärkungselemente 311 mit relativ großer Dicke, beispielsweise größer als 5 mm, vorgesehen sein, sofern eine hohe Steifigkeit des Milchschlauchs in diesem Bereich erforderlich ist. Gegebenenfalls können die Verstärkungselemente 311 als Doppel- oder Mehrfachreihen vorgesehen sein.

Fig. 3e zeigt eine weitere Ausführungsform, in der ausschließlich noppenartige Elemente 350 und 351 vorgesehen sind. In dieser Ausführungsform sind die Noppenelemente 350 mit relativ großem Durchmesser, beispielsweise im Bereich von 3 bis 8 mm, dargestellt, während die die Noppenelemente 350 umgebenden Elemente 351 mit geringerem Durchmesser, beispielsweise im Bereich von 1 bis 5 mm, gezeigt sind. Durch diese Anordnung lässt sich wiederum eine abgestufte Dämpfung erreichen. Anstelle von zwei verschiedenartigen noppenartigen Stoßabsorptionselementen können auch eine Vielzahl unterschiedlicher Elemente Verwendung finden.

In Fig. 4 ist schematisch eine montierbare Stoßabsorptionsvorrichtung 400 gezeigt. In Fig. 4 ist an einem Milchsammelstück 401 mit seinem Anschlussstutzen 402 ein Milchschlauch 404 befestigt. Ferner ist die Stoßabsorptionsvorrichtung 400 an dem Milchschlauch 404 mittels eines Befestigungselements 460 befestigt. Die Stoßabsorptionsvorrichtung 400 umfasst einen stoßabsorbierenden Bereich 410, der in gleicher Weise gestaltet sein kann, wie dies zuvor mit Bezug zu den Fig. 2 bis 3 beschrieben ist. Insbesondere kann der stoßabsorbierende Bereich einteilig aus einem elastischen Material hergestellt sein, z.B. in Form eines Bandes, das dann mittels des Befestigungselements 460 um einen Endbereich des Milchschlauchs 404 angeordnet wird. Das Befestigungselement 460 kann beispielsweise in Form einer Schlauchklemme, eines Bandes, einer Klemme, eines Klettbandes, und dergleichen vorgesehen sein. Auf diese Weise lassen sich vorhandene herkömmliche Milchschläuche in einfacher Weise nachrüsten.

Ferner ist anzumerken, dass die zuvor beschriebenen Ausführungsformen untereinander kombinierbar sind, so dass eine gewünschte Schutzwirkung für den Milchschlauch erreicht wird. Die in den beispielhaften Ausführungsformen dargestellten Anordnungen, d.h., die Anordnung der länglichen Stoßabsorptionselemente und/oder der noppenartigen Stoßabsorptionselemente in den stoßabsorbierenden Bereichen kann selbstverständlich variiert werden, solange diese Elemente durch Verformung und/oder Verbiegung eine Pufferwirkung ausüben. Dabei sind die länglichen Stoßabsorptionselemente stets so ausgebildet, dass diese bei einer Krafteinwirkung mit radialer Komponente eine Vorzugsrichtung für die Verformung oder Verbiegung aufweisen. Des weiteren kann der stoßabsorbierende Bereich nicht nur an einem Endbereich des Milchschlauchs vorgesehen sein, sondern kann auch am anderen Endbereich und/oder im mittleren Bereich vorgesehen sein. Vorzugsweise ist dabei die dämpfende bzw. puffernde Wirkung so eingestellt, dass für den jeweiligen Milchschlauchbereich eine günstige Gesamtwirkung erzielt wird. D.h., im mittleren Bereich wird eine hohe Flexibilität des Milchschlauchs gefordert, so dass dort eine "weiche" Dämpfung, beispielsweise in Form langer, dünner Noppen und/oder dünner länglicher Elemente mit größerem Abstand, verwendet werden.

## Patentansprüche

1. Milchschlauch zur Verbindung eines Milchsammelstücks (201) mit einem Melkbecher in einer automatischen Melkanlage, mit
einem ersten an dem Anschlussstutzen des Melkbechers befestigbaren Endbereich (205) und einem zweiten an dem Anschlussstutzen (202) des Milchsammelstücks (201) befestigbaren Endbereich (206).
wobei zumindest der zweite Endbereich (206) umfasst
einen stoßabsorbierenden Bereich (210; 310; 410) mit länglichen Stoßabsorptionselementen (211; 311), die sich bei radialer Stoßbelastung zumindest abschnittsweise in einer vordefinierten Vorzugsrichtung verformen und/oder verbiegen, und die zur Flächennormalen (240) des zweiten Endbereichs zumindest abschnittsweise geneigt angeordnet sind, und/oder
noppenartige Stoßabsorptionselemente (350, 351), die sich bei der radialen Stoßbelastung verformen und/oder verbiegen.

2. Milchschlauch nach Anspruch 1, wobei die länglichen Stoßabsorptionselemente zumindest einen Abschnitt aufweisen, der einen Neigungswinkel (α) mit der Flächennormalen (240) im Bereich von 8° bis 50° einschließt.

3. Milchschlauch nach einem der Ansprüche 1 bis 2, wobei die länglichen Stoßabsorptionselemente zumindest abschnittsweise zur Längsachse (225) des zweiten Endbereichs schräg angeordnet sind.

4. Milchschlauch nach einem der Ansprüche 1 bis 3, wobei die länglichen Stoßabsorptionselemente so ausgerichtet sind, dass ein erster Abschnitt (211A) jedes Elements einen ersten Neigungswinkel zur Flächennormalen aufweist, und ein zweiter Abschnitt (211B) einen zweiten Neigungswinkel, der sich vom ersten unterscheidet, aufweist.

5. Milchschlauch nach Anspruch 4, wobei sich der Wert des Neigungswinkels vom ersten Abschnitt zum zweiten Abschnitt kontinuierlich ändert.

6. Milchschlauch nach Anspruch 4 oder 5, wobei der erste Neigungswinkel umgekehrt zum zweiten Neigungswinkel orientiert.

7. Milchschlauch nach einem der Ansprüche 1 bis 6, wobei die länglichen Stoßabsorptionselemente eine Dicke im Bereich von 0.5 bis 5 mm aufweisen.

8. Milchschlauch nach einem der Ansprüche 1 bis 7, wobei die Höhe der einzelnen länglichen Stoßabsorptionselemente in einem Bereich von 1 bis 10 mm liegt.

9. Milchschlauch nach einem der Ansprüche 1 bis 8, wobei die Dicke und/oder die Höhe der einzelnen länglichen Stoßabsorptionselemente entlang der Längsrichtung der Stoßabsorptionselemente zumindest abschnittsweise variiert.

10. Milchschlauch nach einem der Ansprüche 1 bis 9, wobei der stoßabsorbierende Bereich in Längsrichtung eine Ausdehnung von 20 bis 60 mm aufweist.

11. Milchschlauch nach einem der Ansprüche 1 bis 10, wobei der stoßabsorbierende Bereich und der zweite Endbereich des Milchschlauchs aus einem Materialstück gebildet sind.

12. Milchschlauch nach einem der Ansprüche 1 bis 11, wobei noppenartige Stoßabsorptionselemente (350, 351) vorgesehen sind mit einem Durchmesser im Bereich von 1 bis 8 mm und einer Länge von 1 bis 10 mm.

13. Milchschlauch nach einem der Ansprüche 1 bis 12, wobei die noppenartigen Stoßabsorptionselemente zumindest mit zwei unterschiedlichen Längen und/oder Durchmessern vorgesehen sind.

14. Milchschlauch nach Anspruch 13, wobei rippenförmige Verstärkungselemente (311) vorgesehen sind, die im Wesentlichen radial ausgerichtet sind, so dass sich durch die rippenförmigen Verstärkungselemente eine erhöhte Längsstabilität des zweiten Endbereichs ergibt.

15. Milchschlauch nach Anspruch 14, wobei die Höhe der rippenförmigen Verstärkungselemente kleiner als die Länge der noppenartigen Stoßabsorptionselemente ist.

16. Stoßabsorptionsvorrichtung zum Anbringen an einem Milchschlauch, mit
einem stoßabsorbierenden Bereich (410) mit länglichen Stoßabsorptionselementen (211), die sich bei radialer Stoßbelastung zumindest abschnittsweise in einer vordefinierten Vorzugsrichtung verformen und/oder verbiegen und/oder
noppenartigen Stoßabsorptionselementen (350, 351), die sich bei der radialen Stoßbelastung verformen und/oder verbiegen,
wobei die Stoßabsorptionsvorrichtung so ausgebildet ist, dass diese an einem Endbereich des ein Milchsammelstück und einen Melkbecher strömungsmäßig verbindenden Milchschlauchs befestigbar ist, und
wobei die länglichen Stoßabsorptionselemente zumindest abschnittsweise geneigt zu einer Flächennormalen des Endbereichs des Milchsammelstücks im montierten Zustand angeordnet sind.

17. Stoßabsorptionsvorrichtung nach Anspruch 16, wobei ein Befestigungsmittel (460) vorgesehen ist, um die Stoßabsorptionsvorrichtung an dem Endbereich zu befestigen.

## Claims

1. A milk hose for connecting a milk collecting piece (201) to a teat cup in an automatic milking plant, comprising
a first end area (205) which is adapted to be fixed to the connection element of the teat cup and a second end area (206) which is adapted to be fixed to the connection element (202) of the milk collecting piece (201),
wherein at least said second end area (206) comprises
an impact-absorbing area (210; 310; 410) comprising elongate impact-absorbing elements (211; 311) which, when subjected to a radial impact load, are deformed and/or bent at least sectionwise in a predefined preferred direction and which are arranged such that they are inclined, at least sectionwise, relative to the normal (240) to the surface of the second end area, and/or
nipple-shaped impact-absorbing elements (350, 351) which are deformed and/or bent when subjected to said radial impact load.

2. A milk hose according to claim 1, wherein the elongate impact-absorbing elements comprise at least one section forming an inclination angle (α) with said normal (240) to the surface, said angle ranging from 8° to 50°.

3. A milk hose according to one of the claims 1 to 2, wherein the elongate impact-absorbing elements are, at least sectionwise, arranged at an oblique angle relative to the longitudinal axis (225) of the second end area.

4. A milk hose according to one of the claims 1 to 3, wherein the elongate impact-absorbing elements are oriented such that a first section (211A) of each element forms a first inclination angle with the normal to the surface and such that a second section (211B) forms a second inclination angle which differs from the first one.

5. A milk hose according to claim 4, wherein the value of said inclination angle varies continuously from said first section to said second section.

6. A milk hose according to claim 4 or 5, wherein the first inclination angle is inverse to the second inclination angle.

7. A milk hose according to one of the claims 1 to 6, wherein the elongate impact-absorbing elements have a thickness in the range of from 0.5 to 5 mm.

8. A milk hose according to one of the claims 1 to 7, wherein the height of the individual elongate impact-absorbing elements is in a range of from 1 to 10 mm.

9. A milk hose according to one of the claims 1 to 8, wherein the thickness and/or the height of the individual elongate impact-absorbing elements vary/varies, at least sectionwise, along the longitudinal direction of the impact-absorbing elements.

10. A milk hose according to one of the claims 1 to 9, wherein the impact-absorbing area has a length of 20 to 60 mm in the longitudinal direction.

11. A milk hose according to one of the claims 1 to 10, wherein the impact-absorbing area and the second end area of the milk hose are formed of one piece of material.

12. A milk hose according to one of the claims 1 to 11, wherein nipple-shaped impact-absorbing elements (350, 351) are provided, which have a diameter that ranges from 1 to 8 mm and a length that ranges from 1 to 10 mm.

13. A milk hose according to one of the claims 1 to 12, wherein the nipple-shaped impact-absorbing elements provided have at least two different lengths and/or diameters.

14. A milk hose according to claim 13, wherein rib-shaped reinforcement elements (311) are provided, which are oriented essentially in the radial direction, so that an increased longitudinal stability of the second end area is obtained by said rib-shaped reinforcement elements.

15. A milk hose according to claim 14, wherein the height of the rib-shaped reinforcement elements is smaller than the length of the nipple-shaped impact-absorbing elements.

16. An impact-absorbing device for attachment to a milk hose, comprising
an impact-absorbing area (410) comprising elongate impact-absorbing elements (211) which, when subjected to a radial impact load, are deformed and/or bent at least sectionwise in a predefined preferred direction, and/or
nipple-shaped impact-absorbing elements (350, 351) which are deformed and/or bent when subjected to said radial impact load,
wherein said impact-absorbing device is implemented such that it is adapted to be fixed to an end area of the milk hose establishing a fluid connection between a milk collecting piece and a teat cup, and
wherein the elongate impact-absorbing elements are arranged such that they are inclined, at least sectionwise, relative to a normal to the surface of the end area of the milk collecting piece in the mounted condition.

17. An impact-absorbing device according to claim 16, wherein a fastening means (460) is provided for fastening the impact-absorbing device to said end area.

## Revendications

1. Tuyau à lait pour relier un pot trayeur (201) à un gobelet trayeur dans une trayeuse automatique, avec
une première zone d'extrémité (205) apte à être fixée au manchon de raccordement du gobelet trayeur (201), et une seconde zone d'extrémité (206) apte à être fixée au manchon de raccordement (202) du pot trayeur (201),
la seconde zone d'extrémité (206), au moins, comprenant
une zone d'absorption des chocs (210 ; 310 ; 410) avec des éléments allongés d'absorption des chocs (211 ; 311) qui se déforment et/ou se tordent au moins par zones, dans un sens préférentiel prédéfini, en cas de choc radial, et qui sont disposés au moins par zones en biais par rapport à la normale au flanc (240) de la seconde zone d'extrémité, et/ou
des éléments d'absorption des chocs en forme de bosses (350, 351) qui se déforment et/ou se tordent lors de la contrainte radiale.

2. Tuyau à lait selon la revendication 1, sur lequel les éléments allongés d'absorption des chocs présentent au moins une partie qui définit avec la normale au flanc (240) un angle d'inclinaison (α) de l'ordre de 8° à 50°.

3. Tuyau à lait selon les revendications 1 à 2, sur lequel les éléments allongés d'absorption des chocs sont disposés au moins par zones en biais par rapport à l'axe longitudinal (225) de la seconde zone d'extrémité.

4. Tuyau à lait selon l'une des revendications 1 à 3, sur lequel les éléments allongés d'absorption des chocs sont orientés de sorte qu'une première partie (211A) de chaque élément présente un premier angle d'inclinaison par rapport à la normale au flanc et qu'une seconde partie (211B) présente un second angle d'inclinaison qui est différent du premier.

5. Tuyau à lait selon la revendication 4, pour lequel la valeur de l'angle d'inclinaison varie de manière continue de la première à la seconde partie.

6. Tuyau à lait selon la revendication 4 ou 5, pour lequel le premier angle d'inclinaison est orienté en sens inverse par rapport au second.

7. Tuyau à lait selon l'une des revendications 1 à 6, pour lequel les éléments allongés d'absorption des chocs présentent une épaisseur de l'ordre de 0,5 à 5 mm.

8. Tuyau à lait selon l'une des revendications 1 à 7, pour lequel la hauteur des différents éléments allongés d'absorption des chocs est de l'ordre de 1 à 10 mm.

9. Tuyau à lait selon l'une des revendications 1 à 8, pour lequel l'épaisseur et/ou la hauteur des différents éléments allongés d'absorption des chocs varie au moins par zones le long de leur sens longitudinal.

10. Tuyau à lait selon l'une des revendications 1 à 9, pour lequel la zone d'absorption des chocs présente dans le sens longitudinal une extension de 20 à 60 mm.

11. Tuyau à lait selon l'une des revendications 1 à 10, pour lequel la zone d'absorption des chocs et la seconde zone d'extrémité du tuyau à lait sont réalisées d'une seule matière.

12. Tuyau à lait selon l'une des revendications 1 à 11, pour lequel il est prévu des éléments d'absorption des chocs en forme de bosses (350, 351) d'un diamètre de l'ordre de 1 à 8 mm et d'une longueur de 1 à 10 mm.

13. Tuyau à lait selon l'une des revendications 1 à 12, pour lequel les éléments d'absorption des chocs en forme de bosses sont prévus au moins avec deux longueurs et/ou diamètres différents.

14. Tuyau à lait selon la revendication 13, pour lequel il est prévu des éléments de renforcement en forme de nervures (311) qui sont orientés sensiblement radialement, de telle sorte que ces éléments de renforcement en forme de nervures donnent une stabilité longitudinale accrue pour la seconde zone d'extrémité.

15. Tuyau à lait selon la revendication 14, pour lequel la hauteur des éléments de renforcement en forme de nervures est inférieure à la longueur des éléments d'absorption des chocs en forme de bosses.

16. Dispositif d'absorption des chocs à installer sur un tuyau à lait, avec
une zone d'absorption des chocs (410) pourvue d'éléments allongés d'absorption des chocs (211) qui se déforment et/ou se tordent au moins par zones, dans un sens préférentiel prédéfini, en cas de choc radial, et/ou
des éléments d'absorption des chocs en forme de bosses (350, 351) qui se déforment et/ou se tordent au moins lors du choc radial,
le dispositif d'absorption des chocs étant conçu pour pouvoir être fixé à une zone d'extrémité d'un tuyau à lait qui assure la liaison d'écoulement entre un pot trayeur et un gobelet trayeur, et
les éléments allongés d'absorption des chocs étant disposés au moins par zones en biais par rapport à une normale au flanc de la zone d'extrémité du pot trayeur, en position montée.

17. Dispositif d'absorption des chocs selon la revendication 16, pour lequel il est prévu un moyen de fixation (460) pour fixer le dispositif d'absorption des chocs à la zone d'extrémité.
